# EUROPÄISCHE PATENTSCHRIFT

(11) **EP 3 121 332 B1**
(45) Veröffentlichungstag und Bekanntmachung des Hinweises auf die Patenterteilung: **28.02.2018**
(21) Anmeldenummer: 15177486.6
(22) Anmeldetag: 20.07.2015
(51) Int. Cl.: D21H 27/30, D21H 27/38, B32B 29/00, B32B 29/08, D21F 11/04, D21C 5/02, D21H 11/12, D21H 19/00

(54) **MEHRLAGIGES KARTONMATERIAL UND VERFAHREN ZUR HERSTELLUNG EINES MEHRLAGIGEN KARTONMATERIALS**
MULTI-LAYER CARDBOARD MATERIAL AND METHOD FOR THE MANUFACTURE OF A MULTILAYER CARDBOARD MATERIAL
CARTON MULTICOUCHE ET PROCEDE DE FABRICATION DE CARTON MULTICOUCHE

(43) Veröffentlichungstag der Anmeldung: 25.01.2017
(73) Patentinhaber: Mayr-Melnhof Karton AG, 1041 Wien (AT)
(72) Erfinder: Zischka, Michael, 8046 Stattegg-Mühl (AT); Magin, Mathias, 67346 Speyer (DE)
(74) Vertreter: Hofstetter, Schurack & Partner

(56) Entgegenhaltungen:
- EP-A1- 2 821 547
- WO-A2-2005/042840

## Beschreibung

Die Erfindung betrifft ein mehrlagiges Kartonmaterial umfassend mindestens eine erste und eine zweite Faserstofflage. Die Erfindung betrifft weiterhin ein Verfahren zur Herstellung eines mehrlagigen Kartonmaterials sowie die Verwendung einer Faserstofflage.

Verfahren und Vorrichtungen zur Herstellung einer mehrlagigen Faserstoffbahn, insbesondere von Papier- oder Kartonbahnen sind aus dem Stand der Technik in verschiedenen Ausgestaltungen bekannt. Dabei werden insbesondere bei der Kartonherstellung mehrere Lagen teilweiser unterschiedlicher Faserstoffe getrennt gebildet und dann nach und nach verpresst bzw. vergautscht.

Nachteilig an den bekannten Kartonmaterialien ist jedoch, dass diese üblicherweise einen sehr hohen Anteil an so genannten Frischfasern beinhalten, so dass hierbei ein sehr hoher Holzbedarf anfällt. Um mehrlagiges Kartonmaterial ressourceschonend herzustellen schlägt zum Beispiel die Druckschrift INCHE201100788 A vor, einen Großteil der Faserstoffe in den Faserstofflagen eines mehrlagigen Kartonmaterials durch Kokosfasern zu ersetzen. Des Weiteren wird vorgeschlagen, den einzelnen Faserlagen Füllmaterial beizumengen, wobei das Füllmaterial aus Schalenpulver oder dem Außenbast der Kokosnuss bestehen kann. Mit der Verwendung von Kokosnüssen als Ersatzmaterial zu Holzfasern kann ein derartiges Kartonmaterial grundsätzlich ressourcenschonend hergestellt werden, da es sich bei Kokosnüssen um schnell nachwachsendes und in ausreichenden Mengen vorhandenes Rohmaterial handelt. Allerdings ist die Bereitstellung von Kokosfasern sowie deren Aufbereitung relativ aufwendig, so dass insbesondere bei der Herstellung von hochwertigem Kartonmaterial es zu einer deutlichen Kostensteigerung kommt.

Aufgabe der vorliegenden Erfindung ist es, ein mehrlagiges Kartonmaterial sowie ein Verfahren zur Herstellung eines mehrlagigen Kartonmaterials bereitzustellen, welches kostengünstig und ressourcenschonend herstellbar beziehungsweise ausführbar ist.

Die Aufgabe wird erfindungsgemäß durch ein mehrlagiges Kartonmaterial mit den Merkmalen des Anspruchs 1 sowie durch ein Verfahren mit den Merkmalen des Anspruchs 10 sowie eine entsprechende Verwendung einer Faserstofflage mit den Merkmalen des Anspruchs 15 gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Kartonmaterials als vorteilhafte Ausgestaltungen des Verfahrens oder der erfindungsgemäßen Verwendung und umgekehrt anzusehen sind.

Ein erster Aspekt der Erfindung betrifft ein mehrlagiges Kartonmaterial umfassend mindestens eine erste Faserstofflage, welche ein cellulosehaltiges Basismaterial aufweist und mindestens eine zweite Faserstofflage umfassend ein Gemisch aus cellulosehaltigem Material und Feinstoffpartikeln, wobei ein Ursprungsmaterial für die Feinstoffpartikel Kokostorf ist und die Feinstoffpartikel eine Partikelgröße < 0,5 mm, insbesondere < 0,3 mm, aufweisen. Bei Kokostorf handelt es sich um ein Abfallprodukt aus der Kokosfaserherstellung. Üblicherweise beträgt der Kokosfaseranteil im Kokostorf weniger als 50%. Überraschenderweise hat sich herausgestellt, dass durch die Verwendung dieses Abfallprodukts, nämlich Kokostorf, sich mehrlagige Kartonmaterialien herstellen lassen, die einerseits kostengünstig und andererseits ressourcenschonend herstellbar sind. Insbesondere weisen die Feinstoffpartikel mit einer Partikelgröße < 0,5 mm, insbesondere < 0,3 mm, volumensteigernde Eigenschaften auf, die durch die Aufnahme von Feuchtigkeit bedingt sind. Während der Herstellung der entsprechenden Faserstofflage expandiert die Kokostorf beziehungsweise deren Feinstoffpartikel enthaltende Faserstofflage, wobei diese Volumenvergrößerung auch nach dem Trocknen des mehrlagigen Kartonmaterials bestehen bleibt. Diese Volumenvergrößerung erhöht zudem die Festigkeit beziehungsweise die Steifigkeit des mehrlagigen Kartonmaterials. Über den Anteil an Feinstoffpartikel kann vorteilhafterweise die Festigkeit und Steifigkeit des mehrlagigen Kartonmaterials insgesamt eingestellt werden. Dabei kann der Anteil an Feinstoffpartikeln in der zweiten Faserstofflage 0,1 bis 50 Gew.-% bezogen auf das Gesamtgewicht der zweiten Faserstofflage betragen. Selbst ein Anteil von 0,1 Gew.-% an Feinstoffpartikeln führt bei dem jährlichen Bedarf an mehrlagigem Kartonmaterial zu einer deutlichen Verringerung von benötigtem Holzstoff für die Kartonherstellung. Zudem besteht die Möglichkeit, dass die zweite Faserstofflage bis zu 20 Gew.-% an Feinstoffpartikeln mit Partikelgrößen zwischen 0,5 mm und 1,19 mm aufweisen. Die erfindungsgemäßen Vorteile werden auch hiermit erreicht. Unter einem Anteil von 0,1 bis 50 Gew.-% an Feinstoffpartikeln bezogen auf das Gesamtgewicht der zweiten Faserstofflage werden im Rahmen der Erfindung folgende Anteile verstanden: 0,1 Gew.-%, 0,5 Gew.-%, 1,0 Gew.-%, 1,5 Gew.-%, 2,0 Gew.-%, 2,5 Gew.-%, 3,0 Gew.-%, 3,5 Gew.-%, 4,0 Gew.-%, 4,5 Gew.-%, 5,0 Gew.-%, 5,5 Gew.-%, 6,0 Gew.-%, 6,5 Gew.-%, 7,0 Gew.-%, 7,5 Gew.-%, 8,0 Gew.-%, 8,5 Gew.-%, 9,0 Gew.-%, 9,5 Gew.-%, 10,0 Gew.-%, 10,5 Gew.-%, 11,0 Gew.-%, 11,5 Gew.-%, 12,0 Gew.-%, 12,5 Gew.-%, 13,0 Gew.-%, 13,5 Gew.-%, 14,0 Gew.-%, 14,5 Gew.-%, 15,0 Gew.-%, 15,5 Gew.-%, 16,0 Gew.-%, 16,5 Gew.-%, 17,0 Gew.-%, 17,5 Gew.-%, 18,0 Gew.-%, 18,5 Gew.-%, 19,0 Gew.-%, 19,5 Gew.-%, 20,0 Gew.-%, 20,5 Gew.-%, 21,0 Gew.-%, 21,5 Gew.-%, 22,0 Gew.-%, 22,5 Gew.-%, 23,0 Gew.-%, 23,5 Gew.-%, 24,0 Gew.-%, 24,5 Gew.-%, 25,0 Gew.-%, 25,5 Gew.-%, 26,0 Gew.-%, 26,5 Gew.-%, 27,0 Gew.-%, 27,5 Gew.-%, 28,0 Gew.-%, 28,5 Gew.-%, 29,0 Gew.-%, 29,5 Gew.-%, 30,0 Gew.-%, 30,5 Gew.-%, 31,0 Gew.-%, 31,5 Gew.-%, 32,0 Gew.-%, 32,5 Gew.-%, 33,0 Gew.-%, 33,5 Gew.-%, 34,0 Gew.-%, 34,5 Gew.-%, 35,0 Gew.-%, 35,5 Gew.-%, 36,0 Gew.-%, 36,5 Gew.-%, 37,0 Gew.-%, 37,5 Gew.-%, 38,0 Gew.-%, 38,5 Gew.-%, 39,0 Gew.-%, 39,5 Gew.-%, 40,0 Gew.-%, 40,5 Gew.-%, 41,0 Gew.-%, 41,5 Gew.-%, 42,0 Gew.-%, 42,5 Gew.-%, 43,0 Gew.-%, 43,5 Gew.-%, 44,0 Gew.-%, 44,5 Gew.-%, 45,0 Gew.-%, 45,5 Gew.-%, 46,0 Gew.-%, 46,5 Gew.-%, 47,0 Gew.-%, 47,5 Gew.-%, 48,0 Gew.-%, 48,5 Gew.-%, 49,0 Gew.-%, 49,5 Gew.-%, 50,0 Gew.-%. Auch Zwischenwerte sind denkbar.

Unter einem cellulosehaltigen Basismaterial beziehungsweise einem cellulosehaltigen Material wird neben Zellstoff im Rahmen der vorliegenden Erfindung ebenfalls Altpapier oder Ähnliches verstanden. Unter Basismaterial wird zudem verstanden, dass zumindest überwiegend, das heißt zu mindestens 51 Gew.-%, insbesondere zu mindestens 75 Gew.-% das Basismaterial aus Zellulose besteht. Das Basismaterial kann zudem grundsätzlich unbeschichtet oder bereits mit einer oder mehreren Schichten versehen sein. Beispielsweise kann das Basismaterial gestrichenes oder ungestrichenes Papier, gestrichener oder ungestrichener Karton oder gestrichene oder ungestrichene Pappe sein. Des Weiteren besteht die Möglichkeit, dass der ersten und/oder zweiten Faserstofflage Faserstoffe aus künstlichen, insbesondere Kunststofffasern und/oder Mineralfasern und/oder natürlichem Fasermaterial zugegeben werden.

In einer weiteren vorteilhaften Ausgestaltung des erfindungsgemäßen mehrlagigen Kartonmaterials beträgt das Längen-zu-Breiten-Verhältnis von mehr als 50 % der Feinstoffpartikel 0,7 : 1 bis 1 : 0,7, insbesondere ungefähr 1:1. Überraschenderweise hat sich herausgestellt, dass bei den genannten Längen-zu-Breiten-Verhältnissen die Volumenvergrößerung und die dadurch bestimmte Erhöhung der Steifigkeit des mehrlagigen Kartonmaterials am größten und stabilsten ist. Auch andere Längen-zu-Breiten-Verhältnisse sind denkbar.

In weiteren vorteilhaften Ausgestaltungen des erfindungsgemäßen mehrlagigen Kartonmaterials ist die erste Faserstofflage als Deck- oder Rückenlage des Kartonmaterials ausgebildet. Des Weiteren kann die zweite Faserstofflage als Einlage des Kartonmaterials ausgebildet sein. Zudem kann zwischen der Decklage und der als Einlage ausgebildeten zweiten Faserstofflage eine Zwischenlage, nämlich eine so genannte Schonschicht ausgebildet sein, die wiederum überwiegend aus cellulosehaltigem Material besteht. Insgesamt kann das Kartonmaterial aus zwei bis zehn Faserstofflagen bestehen. Üblicherweise ist das mehrlagige Kartonmaterial als Kartonbahn ausgebildet und kommt nach einer entsprechenden Zurichtung insbesondere für die Herstellung von Verpackungen infrage.

In weiteren vorteilhaften Ausgestaltungen des erfindungsgemäßen mehrlagigen Kartonmaterials weist die zweite Faserstofflage eine Grammatur zwischen 70 g/m² und 450 g/m², insbesondere 150 g/m² und 350 g/m², auf. Unter einer Grammatur im Bereich zwischen 70 g/m² und 450 g/m² werden im Rahmen der Erfindung folgende Grammaturen verstanden: 70 g/m², 80 g/m², 90 g/m², 100 g/m², 110 g/m², 120 g/m², 130 g/m², 140 g/m², 150 g/m², 160 g/m², 170 g/m², 180 g/m², 190 g/m², 200 g/m², 210 g/m², 220 g/m², 230 g/m², 240 g/m², 250 g/m², 260 g/m², 270 g/m², 280 g/m², 290 g/m², 300 g/m², 310 g/m², 320 g/m², 330 g/m², 340 g/m², 350 g/m², 360 g/m², 370 g/m², 380 g/m², 390 g/m², 400 g/m², 410 g/m², 420 g/m², 430 g/m², 440 g/m², 450 g/m². Auch Zwischenwerte sind denkbar. Je nach Anwendungsbereich und Aufbau des mehrlagigen Kartonmaterials können vorteilhafterweise die notwendigen Grammaturen dargestellt werden. Insbesondere können mit derartigen Ausgestaltungen der zweiten Faserstofflage auch die benötigten Steifigkeitswerte des Kartonmaterials eingestellt werden. Das die zweite Faserstofflage aufweisende mehrlagige Kartonmaterial kann insgesamt eine Grammatur zwischen 145 g/m² und 2000 g/m², insbesondere 230 g/m² und 800 g/m², aufweisen. Die Grammaturen des Kartonmaterials werden vorteilhafterweise an den Anwendungsbereich des Kartonmaterials angepasst. Unter einer Grammatur des mehrlagigen Kartonmaterials im Bereich zwischen 145 g/m² und 2000 g/m² werden im Rahmen der Erfindung folgende Grammaturen verstanden: 145 g/m², 150 g/m², 160 g/m², 170 g/m², 180 g/m², 190 g/m², 200 g/m², 210 g/m², 220 g/m², 230 g/m², 240 g/m², 250 g/m², 260 g/m², 270 g/m², 280 g/m², 290 g/m², 300 g/m², 310 g/m², 320 g/m², 330 g/m², 340 g/m², 350 g/m², 360 g/m², 370 g/m², 380 g/m², 390 g/m², 400 g/m², 410 g/m², 420 g/m², 430 g/m², 440 g/m², 450 g/m², 460 g/m², 470 g/m², 480 g/m², 490 g/m², 500 g/m², 510 g/m², 520 g/m², 530 g/m², 540 g/m², 550 g/m², 560 g/m², 570 g/m², 580 g/m², 590 g/m², 600 g/m², 610 g/m², 620 g/m², 630 g/m², 640 g/m², 650 g/m², 660 g/m², 670 g/m², 680 g/m², 690 g/m², 700 g/m², 710 g/m², 720 g/m², 730 g/m², 740 g/m², 750 g/m², 760 g/m², 770 g/m², 780 g/m², 790 g/m², 800 g/m², 810 g/m², 820 g/m², 830 g/m², 840 g/m², 850 g/m², 860 g/m², 870 g/m², 880 g/m², 890 g/m², 900 g/m², 910 g/m², 920 g/m², 930 g/m², 940 g/m², 950 g/m², 960 g/m², 970 g/m², 980 g/m², 990 g/m², 1000 g/m², 1010 g/m², 1020 g/m², 1030 g/m², 1040 g/m², 1050 g/m², 1060 g/m², 1070 g/m², 1080 g/m², 1090 g/m², 1100 g/m², 1110 g/m², 1120 g/m², 1130 g/m², 1140 g/m², 1150 g/m², 1160 g/m², 1170 g/m², 1180 g/m², 1190 g/m², 1200 g/m², 1210 g/m², 1220 g/m², 1230 g/m², 1240 g/m², 1250 g/m², 1260 g/m², 1270 g/m², 1280 g/m², 1290 g/m², 1300 g/m², 1310 g/m², 1320 g/m², 1330 g/m², 1340 g/m², 1350 g/m², 1360 g/m², 1370 g/m², 1380 g/m², 1390 g/m², 1400 g/m², 1410 g/m², 1420 g/m², 1430 g/m², 1440 g/m², 1450 g/m², 1460 g/m², 1470 g/m², 1480 g/m², 1490 g/m², 1500 g/m², 1510 g/m², 1520 g/m², 1530 g/m², 1540 g/m², 1550 g/m², 1560 g/m², 1570 g/m², 1580 g/m², 1590 g/m², 1600 g/m², 1610 g/m², 1620 g/m², 1630 g/m², 1640 g/m², 1650 g/m², 1660 g/m², 1670 g/m², 1680 g/m², 1690 g/m², 1700 g/m², 1710 g/m², 1720 g/m², 1730 g/m², 1740 g/m², 1750 g/m², 1760 g/m², 1770 g/m², 1780 g/m², 1790 g/m², 1800 g/m², 1810 g/m², 1820 g/m², 1830 g/m², 1840 g/m², 1850 g/m², 1860 g/m², 1870 g/m², 1880 g/m², 1890 g/m², 1900 g/m², 1910 g/m², 1920 g/m², 1930 g/m², 1940 g/m², 1950 g/m², 1960 g/m², 1970 g/m², 1980 g/m², 1990 g/m², 2000 g/m². Auch Zwischenwerte sind denkbar.

In einer weiteren vorteilhaften Ausgestaltung des erfindungsgemäßen mehrlagigen Kartonmaterials umfasst die Partikelgrößenverteilung der Feinstoffpartikel in der zweiten Faserstofflage zumindest 0,1 bis 60 % Partikel der Größe 0,15 bis 0,297 mm, 0,1 bis 60 % Partikel der Größe 0,149 bis 0,075 mm und 0,1 bis 60 % Partikel der Größe < 0,075 mm. Auch größere Partikelgrößen sind ohne Weiteres denkbar, wobei auch Partikelgrößen größer 0,297 mm vorhanden sein können. Dabei ist allerdings zu beachten, dass die Partikelgröße derart ausgewählt wird, dass es zu keinen unerwünschten Ausbuchtungen der zweiten Faserstofflage kommt. In dem im Vorhergehenden genannten Partikelgrößenverteilungsbereich ergeben sich besonders stabile Volumenvergrößerungen während der Herstellung des mehrlagigen Kartonmaterials. Unter einem Partikelgrößenanteil zwischen 0,1 bis 60 % werden im Rahmen der Erfindung folgende Partikelgrößenanteile verstanden: 0,1 %, 0,5 %, 1,0 %, 1,5 %, 2,0 %, 2,5 %, 3,0 %, 3,5 %, 4,0 %, 4,5 %, 5,0 %, 5,5 %, 6,0 %, 6,5 %, 7,0 %, 7,5 %, 8,0 %, 8,5 %, 9,0 %, 9,5 %, 10,0 %, 10,5 %, 11,0 %, 11,5 %, 12,0 %, 12,5 %, 13,0 %, 13,5 %, 14,0 %, 14,5 %, 15,0 %, 15,5 %, 16,0 %, 16,5 %, 17,0 %, 17,5 %, 18,0 %, 18,5 %, 19,0 %, 19,5 %, 20,0 %, 20,5 %, 21,0 %, 21,5 %, 22,0 %, 22,5 %, 23,0 %, 23,5 %, 24,0 %, 24,5 %, 25,0 %, 25,5 %, 26,0 %, 26,5 %, 27,0 %, 27,5 %, 28,0 %, 28,5 %, 29,0 %, 29,5 %, 30,0 %, 30,5 %, 31,0 %, 31,5 %, 32,0 %, 32,5 %, 33,0 %, 33,5 %, 34,0 %, 34,5 %, 35,0 %, 35,5 %, 36,0 %, 36,5 %, 37,0 %, 37,5 %, 38,0 %, 38,5 %, 39,0 %, 39,5 %, 40,0 %, 40,5 %, 41,0 %, 41,5 %, 42,0 %, 42,5 %, 43,0 %, 43,5 %, 44,0 %, 44,5 %, 45,0 %, 45,5 %, 46,0 %, 46,5 %, 47,0 %, 47,5 %, 48,0 %, 48,5 %, 49,0 %, 49,5 %, 50,0 %, 50,5 %, 51,0 %, 51,5 %, 52,0 %, 52,5 %, 53,0 %, 53,5 %, 54,0 %, 54,5 %, 55,0 %, 55,5 %, 56,0 %, 56,5 %, 57,0 %, 57,5 %, 58,0 %, 58,5 %, 59,0 %, 59,5 %, 60,0 %. Auch Zwischenwerte sind denkbar.

Ein zweiter Aspekt der vorliegenden Erfindung betrifft ein Verfahren zur Herstellung eines mehrlagigen Kartonmaterials, insbesondere einer mehrlagigen Kartonbahn, umfassend mindestens eine erste und eine zweite Faserstofflage, dadurch gekennzeichnet, dass das Verfahren zumindest folgende Schritte umfasst: Aufbringen einer ersten Faserstoffsuspension auf ein erstes permeables oder nicht-permeables Transportband zur Ausbildung einer ersten Faserstofflage, wobei die erste Faserstoffsuspension ein cellulosehaltiges Basismaterial aufweist; Aufbringen einer zweiten Faserstoffsuspension auf ein zweites permeables oder nicht-permeables Transportband zur Ausbildung der zweiten Faserstofflage, wobei die zweite Faserstoffsuspension ein Gemisch aus cellulosehaltigem Material und Feinstoffpartikeln umfasst, wobei ein Ursprungsmaterial für die Feinstoffpartikel Kokostorf ist und die Feinstoffpartikel eine Partikelgröße < 0,5 mm, insbesondere < 0,3 mm, aufweisen; und Vergautschen der ersten mit der zweiten Faserstofflage unter Bildung des mehrlagigen Kartonmaterials. Nach dem Vergautschen der ersten und zweiten Faserstofflage können diese mit weiteren Faserstofflagen vergautscht werden und einem anschließenden Trocknungsprozess oder weiteren Verarbeitungsschritten unterzogen werden. Die Verwendung von Kokostorf als Abfallprodukt der Kokosfaserherstellung stellt wiederum eine kostengünstige und ressourcenschonende Alternative zu der Verwendung von Holzmaterial oder auch Kokosfasern dar. Dabei kann der Anteil an Feinstoffpartikeln in der zweiten Faserstofflage 0,1 bis 50 Gew.-% bezogen auf das Gesamtgewicht der zweiten Faserstofflage betragen. Bereits der Einsatz von 0,1 Gew.-% Feinstoffpartikeln führt aufgrund des jährlichen weltweiten Kartonbedarfs zu einer deutlichen Schonung von Ressourcen, insbesondere von Holzressourcen.

Des Weiteren hat sich überraschenderweise herausgestellt, dass die Verwendung von in Kokostorf vorhandenen Feinstoffpartikeln mit einer Partikelgröße < 0,5 mm, insbesondere < 0,3 mm, das Volumen der zweiten Faserstofflage durch Wasseraufnahme der Feinstoffpartikel während der Kartonherstellung deutlich vergrößern, wodurch es zu einer verbesserten Festigkeit und Steifigkeit des hergestellten mehrlagigen Kartonmaterials kommt. Besonders gut sind diese Eigenschaften ausgeprägt, wenn das Längen-zu-Breiten-Verhältnis von mehr als 50 % der Feinstoffpartikel 0,7 : 1 bis 1 : 0,7, insbesondere ungefähr 1 : 1, beträgt.

Grundsätzlich kann es vorgesehen sein, dass bei der Herstellung der einzelnen Faserlagen bzw. der einzelnen Faserstoffsuspension(en) Additive wie zum Beispiel Bindemittel, Retentionsmittel, Füllmittel, Farbstoffe, Bleichmittel, Nassverfestiger und/oder weitere Additive in der Papier- und Kartonherstellung verwendete Hilfsstoffe verwendet werden, um den Produktionsprozess und die Eigenschaften und Verarbeitbarkeit der resultierenden mehrlagigen Faserstoffbahn in der gewünschten Weise zu beeinflussen. Geeignete Füllmittel sind in der Regel Mineralstoffe, wie Kaolin, Talkum oder Kalziumkarbonat. Zur Erhöhung der Oberflächenfestigkeit und der Feuchtigkeitsbeständigkeit kann den Faserlagen bzw. der daraus entstehenden Faserbahn Stärke mittels einer Leimpresse oder einem Stärkebad zugegeben werden. Als Retentionsmittel zur Steuerung der Entwässerung bei der Bildung der einzelnen Faserlagen bzw. der Blattbildung kann den Faserstoffsuspensionen beispielsweise Polyethylenimin zugegeben werden. Als Additive können dabei grundsätzlich Biopolymere, beispielsweise Hemicellulose, Cellulose, Lignin und/oder Polyosen, und/oder Polysaccharide, beispielsweise Stärke, Stärkepolymere, Alginate, Chitine, Hemicellulose, Cellulosederivate, Celluloseester, Celluloseacetat, Cellulosetriacetat, Cellulosenitrat, Celluloseether, Ethylcellulose, Methylcellulose, Oxyethylcellulose, Oxypropylcellulose und Carboxymethylcellulose verwendet werden. Weitere grundsätzlich verwendbare Additive umfassen Harze wie etwa Phenolformaldehydharze, Melaminformaldehydharze, Mischungen aus Phenolformaldehydharzen und Melaminformaldehydharzen, neutrale oder anionische Polymere, Polyvinylalkohol, Polyacrylamid, anionische oder kationische Polyelektrolyte wie beispielsweise Acrylsäure, Carboxymethylcellulose, anionische oder kationische Stärke, Polydiallyldiamoniumchlorid (PolyDADMAC)) oder Polyvinylamin, natürliche Trockenfestmittel wie beispielsweise Galactomannan oder Alginate, synthetische Trockenfestmittel wie beispielsweise Polyamine, Polyamide, Polyalkohole, Polyacrylamide, Polyvinylalkohol, Polyvinyl(alkoholacetat), Polyimine oder Polyethylenimin (PEI), vernetzende oder physikalische Nassfestmittel wie beispielsweise Glyoxal, Glutardialdehyd (1,5-Pentandialdehyd), Aldehydstärke, Polyamidoamin-Epichlorhydrin (PAAE), Melamin-Formaldehyd (MF) oder Harnstoff-Formaldehyd (HF), basische, saure und/oder substantive Farbstoffe (Direktfarbstoffe), Flammschutzmittel wie beispielsweise halogenierte Flammschutzmittel, Organophosphor-Flammschutzmittel oder anorganische Flammschutzmittel wie etwa Aluminiumhydroxid, Magnesiumhydroxid, Ammoniumsulfat, Antimontrioxid oder Antimonpentoxid. Schließlich können auch Additive aus den Gruppen, Fixiermittel, Aluminiumsalze, Flammhemmungsmittel, Entschäumer, Entlüfter, Ligninderivate, Ligninsulfonate, Biozide und/oder Fungizide verwendet werden. Die Additive können dabei grundsätzlich ein- oder mehrmals an der gleichen Stelle und/oder an unterschiedlichen Stellen des Herstellungsprozesses zugegeben werden.

In einer weiteren vorteilhaften Ausgestaltung des erfindungsgemäßen Verfahrens werden zur Herstellung der Feinstoffpartikel zumindest folgende Verfahrensschritte durchgeführt: Auflösen des Kokostorfs mittels eines Pulpers; Mahlung des aufgelösten Kokostorfs; und Sieben und/oder Abscheiden und/oder Sortieren des gemahlenen Kokostorfs zumindest in Partikelgrößen größer und kleiner 0,5 mm. Durch die Mahlung ist gewährleistet, dass ein überwiegender Anteil der Feinstoffpartikel des Kokostorfs dem erfindungsgemäßen Verfahren zugeführt werden können. Feinstoffpartikel, die größere Partikelgrößen aufweisen können durch Mahlung auf die gewünschten Partikelgrößen reduziert werden. Somit kann der Kokostorf nahezu vollständig für die Herstellung des mehrlagigen Kartonmaterials verwendet werden.

Die Vorteile des mehrlagigen Kartonmaterials gemäß dem ersten Erfindungsaspekt sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind. Ein dritter Aspekt der Erfindung betrifft eine Verwendung einer Faserstofflage umfassend ein Gemisch aus cellulosehaltigem Material und Feinstoffpartikeln, wobei ein Ursprungsmaterial für die Feinstoffpartikel Kokostorf ist und die Feinstoffpartikel eine Partikelgröße < 0,5 mm, insbesondere < 0,3 mm, aufweisen, zur Herstellung eines mehrlagigen Kartonmaterials, insbesondere einer mehrlagigen Kartonbahn. Durch die erfindungsgemäße Verwendung der Faserstofflage kann das mehrlagige Kartonmaterial kostengünstig und ressourcenschonend hergestellt werden. Zudem ergibt sich die Möglichkeit der Einstellung vordefinierter Volumina der Faserstofflage über den Anteil an Feinstoffpartikeln in der Faserstofflage.

Die sich aus der Verwendung der Faserstofflage sich ergebenden weiteren Merkmale und Vorteile sind den Beschreibungen des ersten und zweiten Erfindungsaspekts zu entnehmen, wobei vorteilhafte Ausgestaltungen des ersten Erfindungsaspekts als vorteilhafte Ausgestaltungen des zweiten und dritten Erfindungsaspekts und umgekehrt anzusehen sind.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
Fig. 1 eine schematische Darstellung eines erfindungsgemäßen mehrlagigen Kartonmaterials; und
Fig. 2 ein Blockdiagramm eines Verfahrensablaufs zur Herstellung eines mehrlagigen Kartonmaterials.

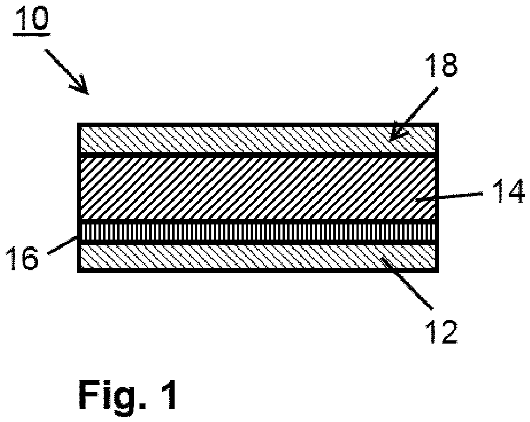

Fig. 1 zeigt eine schematische Darstellung eines mehrlagigen Kartonmaterials 10. Das Kartonmaterial 10 ist dabei üblicherweise als Kartonbahn ausgebildet. Man erkennt, dass in dem dargestellten Ausführungsbeispiel das Kartonmaterial 10 vierlagig ausgebildet ist. Dabei ist eine erste Faserstofflage 12 als Decklage 12 des Kartonmaterials 10 ausgebildet. Die Decklage 12 weist dabei ein Lagengewicht beziehungsweise eine Grammatur von 35 g/m² auf. Zwischen der Decklage 12 und einer zweiten Faserstofflage 14, die als Einlage des Kartonmaterials 10 ausgebildet ist, ist eine Schonschicht 16 mit einem Lagengewicht von 35 g/m² angeordnet. Des Weiteren erkennt man, dass die Einlage beziehungsweise zweite Faserstofflage 14 mit einer Rückenlage 18 des Kartonmaterials 10 verbunden ist, wobei das Lagengewicht der Rückenlage 35 g/m² beträgt. Das Lagengewicht beziehungsweise die Grammatur der als Einlage ausgebildeten zweiten Faserstofflage 14 beträgt in dem dargestellten Ausführungsbeispiel 165 g/m². Unter Einbeziehung eines Strichgewichts der Deck- und Rückenlage 12, 18 von 30g/m², ergibt sich für das mehrlagige Kartonmaterial 10 insgesamt eine Grammatur von 300 g/m². Zudem umfasst die zweite Faserstofflage 14 ein Gemisch aus cellulosehaltigem Material und Feinstoffpartikeln, wobei ein Ursprungsmaterial für die Feinstoffpartikel Kokostorf ist und die Feinstoffpartikel eine Partikelgröße < 0,5 mm, insbesondere < 0,3 mm aufweisen. In dem dargestellten Ausführungsbeispiel beträgt der Kokostorfanteil beziehungsweise der Anteil an Feinstoffpartikeln in der zweiten Faserstofflage 5 bis 15 Gew.-% bezogen auf das Gesamtgewicht der zweiten Faserstofflage 14. Es ist aber auch möglich, dass der Anteil an Feinstoffpartikeln zwischen 0,1 bis 50 Gew.-% bezogen auf das Gesamtgewicht der zweiten Faserstofflage 14 beträgt.

Das in dem Ausführungsbeispiel dargestellte mehrlagige Kartonmaterial 10 weist zudem einen Strich auf der Decklage 12 sowie der Rückenlage 18 auf. Es ist aber auch möglich, dass neben dem zuvor beschriebenen gestrichenen Karton beispielsweise ein ungestrichener Graukarton ausgebildet ist (nicht dargestellt). Hierbei können die Grammaturen der einzelnen Kartonlagen folgende Werte aufweisen: Decklage 12: 32 g/m², Schonschicht 16: 29 g/m², Rückenlage 18: 35 g/m² und Einlage 14: 169 g/m², so dass die Gesamtgrammatur dieses mehrlagigen Kartonmaterials 265 g/m² ist. Auch hier besteht die Einlage 14 wiederum aus der zweiten Faserstofflage 14, die ein Gemisch aus cellulosehaltigem Material und Feinstoffpartikeln aus Kokostorf mit einer Partikelgröße < 0,5 mm ist.

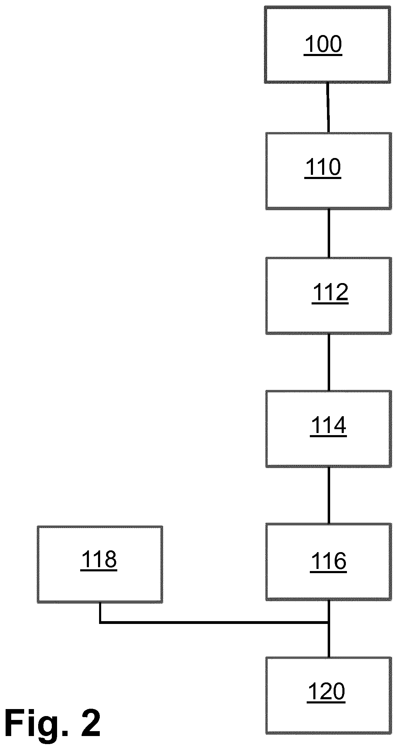

Fig. 2 zeigt ein Blockdiagramm eines beispielhaften Verfahrensablaufs zur Herstellung des mehrlagigen Kartonmaterials 10. Man erkennt, dass in einem ersten Verfahrensschritt 100 ein Auflösen des Kokostorfs mittels eines Pulpers erfolgt. In einem sich anschließenden Verfahrensschritt 110 können möglicherweise im Kokostorf vorhandene Sandpartikel abgetrennt werden. In einem sich anschließenden Verfahrensschritt 112 erfolgt eine Mahlung (Stoffdichtebereich 0,1-8%) des aufgelösten Kokostorfs. Diesem Verfahrensschritt schließt sich ein weiterer Verfahrensschritt 114 an, in dem durch Sieben und/oder Abscheiden und/oder Sortieren des gemahlenen Kokostorfs zumindest Partikelgrößen größer und kleiner 0,5 mm voneinander getrennt werden. In einem weiteren Verfahrensschritt 116 wird eine erste Faserstoffsuspension auf ein erstes permeables oder nicht-permeables Transportband zur Ausbildung einer ersten Faserstofflage 12 aufgebracht, wobei die erste Faserstoffsuspension ein cellulosehaltiges Basismaterial aufweist. Zeitgleich oder nahezu zeitgleich wird in einem Verfahrensschritt 118 eines zweite Faserstoffsuspension auf ein zweites permeables oder nicht-permeables Transportband zur Ausbildung einer zweiten Faserstofflage 14 aufgebracht, wobei die zweite Faserstoffsuspension ein Gemisch aus cellulosehaltigem Material und den aus Kokostorf gewonnenen beziehungsweise enthaltenen Feinstoffpartikeln umfasst. Schließlich wird in einem anschließenden Verfahrensschritt 120 die erste Faserstofflage 12 mit der zweiten Faserstofflage 14 unter Bildung des mehrlagigen Kartonmaterials 10 vergautscht. Dem Verfahrensschritt des Vergautschens können sich weitere Bearbeitungsschritte, insbesondere ein weiteres Vergautschen weiterer Faserstofflagen anschließen. Zudem kann das vergautschte Faserstoffmaterial getrocknet und gegebenenfalls mit einem Strich versehen werden. Zudem besteht die Möglichkeit, dass die Oberflächen des Kartonmaterials 10 geglättet werden.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen beispielsweise aufgrund von Messfehlern, Systemfehlern, Einwaagefehlern, DIN-Toleranzen und dergleichen als vom Rahmen der Erfindung mitumfasst anzusehen.

## Patentansprüche

1. Mehrlagiges Kartonmaterial (10) umfassend
- mindestens eine erste Faserstofflage (12), welche ein cellulosehaltiges Basismaterial aufweist, und
- mindestens eine zweite Faserstofflage (14) umfassend ein Gemisch aus cellulosehaltigem Material und Feinstoffpartikeln, wobei ein Ursprungsmaterial für die Feinstoffpartikel Kokostorf ist und die Feinstoffpartikel eine Partikelgröße < 0,5 mm, insbesondere < 0,3 mm, aufweisen.

2. Mehrlagiges Kartonmaterial (10) nach Anspruch 1, **dadurch gekennzeichnet, dass** der Anteil an Feinstoffpartikeln in der zweiten Faserstofflage (14) 0,1 bis 50 Gew.-% bezogen auf das Gesamtgewicht der zweiten Faserstofflage (14) beträgt.

3. Mehrlagiges Kartonmaterial (10) nach Anspruch 1 oder 2, **dadurch gekennzeichnet, dass** das Längen-zu-Breiten-Verhältnis von mehr als 50% der Feinstoffpartikel 0,7 : 1 bis 1 : 0,7, insbesondere ungefähr 1 : 1, beträgt.

4. Mehrlagiges Kartonmaterial (10) nach einem der vorhergehenden Ansprüche, **dadurch gekennzeichnet, dass** die erste Faserstofflage (12) als Deck- oder Rückenlage (12, 18) des Kartonmaterials ausgebildet ist.

5. Mehrlagiges Kartonmaterial (10) nach einem der vorhergehenden Ansprüche, **dadurch gekennzeichnet, dass** die zweite Faserstofflage (14) als Einlage des Kartonmaterials (10) ausgebildet ist.

6. Mehrlagiges Kartonmaterial (10) nach einem der vorhergehenden Ansprüche, **dadurch gekennzeichnet, dass** die zweite Faserstofflage (14) eine Grammatur zwischen 70 g/m² und 450 g/m², insbesondere 150 g/m² und 350 g/m², aufweist.

7. Mehrlagiges Kartonmaterial (10) nach einem der vorhergehenden Ansprüche, **dadurch gekennzeichnet, dass** das Kartonmaterial (10) eine Grammatur zwischen 145 g/m² und 2000 g/m², insbesondere zwischen 230 g/m² und 800 g/m², aufweist.

8. Mehrlagiges Kartonmaterial (10) nach einem der vorhergehenden Ansprüche, **dadurch gekennzeichnet, dass** das Kartonmaterial (10) aus 2 bis 10 Faserstofflagen besteht.

9. Mehrlagiges Kartonmaterial (10) nach einem der vorhergehenden Ansprüche, **dadurch gekennzeichnet, dass** die Partikelgrößenverteilung der Feinstoffpartikel in der zweiten Faserstofflage (14) zumindest 0,1 - 60% Partikel der Größe 0,15 - 0,297 mm, 0,1 - 60% Partikel der Größe 0,149 - 0,075 mm und 0,1 - 60% Partikel der Größe < 0,075 mm, umfasst und/oder einen Entwässerungswiderstand Schopper-Riegler-Wert zwischen 20 - 60SR° aufweist.

10. Verfahren zur Herstellung eines mehrlagigen Kartonmaterials (10), insbesondere einer mehrlagigen Kartonbahn, umfassend mindestens eine erste und eine zweite Faserstofflage (12, 14), **dadurch gekennzeichnet, dass** das Verfahren zumindest folgende Schritte umfasst:
- Aufbringen einer ersten Faserstoffsuspension auf ein erstes permeables oder nicht-permeables Transportband zur Ausbildung der ersten Faserstofflage (12), wobei die erste Faserstoffsuspension ein cellulosehaltiges Basismaterial aufweist;
- Aufbringen einer zweiten Faserstoffsuspension auf ein zweites permeables oder nicht-permeables Transportband zur Ausbildung der zweiten Faserstofflage (14), wobei die zweite Faserstoffsuspension ein Gemisch aus cellulosehaltigem Material und Feinstoffpartikel umfasst und ein Ursprungsmaterial für die Feinstoffpartikel Kokostorf ist, wobei die Feinstoffpartikel eine Partikelgröße < 0,5 mm, insbesondere < 0,3 mm, aufweisen; und
- Vergautschen der ersten mit der zweiten Faserstofflage (12, 14) unter Bildung des mehrlagigen Kartonmaterials (10).

11. Verfahren nach Anspruch 10, **dadurch gekennzeichnet, dass** das Längen-zu-Breiten-Verhältnis von mehr als 50% der Feinstoffpartikel 0,7 : 1 bis 1 : 0,7, insbesondere ungefähr 1 : 1, beträgt.

12. Verfahren nach Anspruch 10 oder 11, **dadurch gekennzeichnet, dass** zur Herstellung der Feinstoffpartikel zumindest folgende Verfahrensschritte durchgeführt werden:
- Auflösen des Kokostorfs mittels eines Pulpers;
- Mahlung des aufgelösten Kokostorfs; und
- Sieben und/oder Abscheiden und/oder Sortieren des gemahlenen Kokostorfs zumindest in Partikelgrößen größer und kleiner 0,5 mm.

13. Verfahren nach einem der Ansprüche 10 bis 12, **dadurch gekennzeichnet, dass** der Anteil an Feinstoffpartikeln in der zweiten Faserstofflage (14) 0,1 bis 50 Gew.-% bezogen auf das Gesamtgewicht der zweiten Faserstofflage (14) beträgt.

14. Verfahren nach einem der Ansprüche 10 bis 13, **dadurch gekennzeichnet, dass** mindestens einer Faserstofflage (12, 14) Bindemittel, Retentionsmittel, Füllmittel, Farbstoffe, Bleichmittel, Nassverfestiger und/oder sonstige in der Papier- und Kartonherstellung verwendete Hilfsstoffe zugegeben werden.

15. Verwendung einer Faserstofflage umfassend ein Gemisch aus cellulosehaltigem Material und Feinstoffpartikeln, wobei ein Ursprungsmaterial für die Feinstoffpartikel Kokostorf ist und die Feinstoffpartikel eine Partikelgröße < 0,5 mm, insbesondere < 0,3 mm, aufweisen, zur Herstellung eines mehrlagigen Kartonmaterials, insbesondere einer mehrlagigen Kartonbahn.

## Claims

1. Multi-layer cardboard material (10) including
- at least one first fibrous-material layer (12), which comprises a cellulose-containing base material, and
- at least one second fibrous-material layer (14) including a mixture of cellulose-containing material and fine material particles, wherein a material of origin for the fine material particles is coco peat and the fine material particles have a particle size < 0.5 mm, in particular < 0.3 mm.

2. Multi-layer cardboard material (10) according to claim 1, **characterized in that** the portion of fine material particles in the second fibrous-material layer (14) is 0.1 to 50 % by wt. related to the overall weight of the second fibrous-material layer (14).

3. Multi-layer cardboard material (10) according to claim 1 or 2, **characterized in that** the length-to-width ratio of more than 50 % of the fine material particles is 0.7 : 1 to 1 : 0.7, in particular approximately 1 : 1.

4. Multi-layer cardboard material (10) according to any one of the preceding claims, **characterized in that** the first fibrous-material layer (12) is formed as a cover or back layer (12, 18) of the cardboard material.

5. Multi-layer cardboard material (10) according to any one of the preceding claims, **characterized in that** the second fibrous-material layer (14) is formed as an inlay of the cardboard material (10).

6. Multi-layer cardboard material (10) according to any one of the preceding claims, **characterized in that** the second fibrous-material layer (14) has a grammage between 70 g/m² and 450 g/m², in particular 150 g/m² and 350 g/m².

7. Multi-layer cardboard material (10) according to any one of the preceding claims, **characterized in that** the cardboard material (10) has a grammage between 145 g/m² and 2000 g/m², in particular between 230 g/m² and 800 g/m².

8. Multi-layer cardboard material (10) according to any one of the preceding claims, **characterized in that** the cardboard material (10) is constituted of 2 to 10 fibrous-material layers.

9. Multi-layer cardboard material (10) according to any one of the preceding claims, **characterized in that** the particle size distribution of the fine material particles in the second fibrous-material layer (14) includes at least 0.1 - 60 % of particles of the size 0.15 - 0.297 mm, 0.1 - 60 % of particles of the size 0.149 - 0.075 mm and 0.1 - 60 % of particles of the size < 0.075 mm, and/or has a dehydration resistance Schopper-Riegler value between 20 - 60 SR°.

10. Method for producing a multi-layer cardboard material (10), in particular a multi-layer cardboard web, including at least one first and one second fibrous-material layer (12, 14) **characterized in that** the method includes at least the following steps:
- applying a first fibrous-material suspension to a first permeable or non-permeable conveyor belt for forming the first fibrous-material layer (12), wherein the first fibrous-material suspension comprises a cellulose-containing base material;
- applying a second fibrous-material suspension to a second permeable or non-permeable conveyor belt for forming the second fibrous-material layer (14), wherein the second fibrous-material suspension includes a mixture of cellulose-containing material and fine material particles and a material of origin for the fine material particles is coco peat, wherein the fine material particles have a particle size < 0.5 mm, in particular < 0.3 mm; and
- couching the first with the second fibrous-material layer (12, 14) with formation of the multi-layer cardboard material (10).

11. Method according to claim 10, **characterized in that** the length-to-width ratio of more than 50 % of the fine material particles is 0.7 : 1 to 1 : 0.7, in particular approximately 1 : 1.

12. Method according to claim 10 or 11, **characterized in that** for producing the fine material particles at least the following methods steps are performed:
- dissolving the coco peat by means of a pulper;
- milling the dissolved coco peat; and
- sieving and/or separating and/or sorting the milled coco peat at least into particles sizes greater and less than 0.5 mm.

13. Method according to any one of claims 10 to 12, **characterized in that** the portion of fine material particles in the second fibrous-material layer (14) is 0.1 to 50 % by wt. related to the overall weight of the second fibrous-material layer (14).

14. Method according to any one of claims 10 to 13, **characterized in that** binders, retention agents, fillers, dyes, bleachers, wet strength agents and/or other adjuvants used in the paper and cardboard production are added to at least one fibrous-material layer (12, 14).

15. Use of a fibrous-material layer including a mixture of cellulose-containing material and fine material particles, wherein a material of origin for the fine material particles is coco peat and the fine material particles have a particle size < 0.5 mm, in particular < 0.3 mm, for producing a multi-layer cardboard material, in particular a multi-layer cardboard web.

## Revendications

1. Matériau en carton multicouches (10), comprenant
- au moins une première couche de matière fibreuse (12), qui présente un matériau de base en cellulose et
- au moins une deuxième couche de matière fibreuse (14), comprenant un mélange de matériau cellulosique et de particules de matières fines, un matériau d'origine pour les particules de matières fines étant de la tourbe de coco et les particules de matières fines présentant une grosseur de particule < 0,5 mm, en particulier < 0,3 mm.

2. Matériau en carton multicouches (10) selon la revendication 1, **caractérisé en ce que** la proportion de particules de matières fines dans la deuxième couche de matière fibreuse (14) se monte à 0,1 à 50 % en poids par rapport au poids total de la deuxième couche de matière fibreuse (14).

3. Matériau en carton multicouches (10) selon la revendication 1 ou 2, **caractérisé en ce que** le rapport longueur - largeur de plus de 50 % des particules de matières fines est de 0,7 : 1 à 1 : 0,7, en particulier d'environ 1 : 1.

4. Matériau en carton multicouches (10) selon l'une des revendications précédentes, **caractérisé en ce que** la première couche de matière fibreuse (12) est constituée en tant que couche de revêtement ou couche inférieure (12, 18) du matériau en carton.

5. Matériau en carton multicouches (10) selon l'une des revendications précédentes, **caractérisé en ce que** la deuxième couche de matière fibreuse (14) est constituée en tant qu'insert du matériau en carton (10).

6. Matériau en carton multicouches (10) selon l'une des revendications précédentes, **caractérisé en ce que** la deuxième couche de matière fibreuse (14) présente un grammage entre 70 g/m² et 450 g/m², en particulier 150 g/m² et 350 g/m².

7. Matériau en carton multicouches (10) selon l'une des revendications précédentes, **caractérisé en ce que** le matériau en carton (10) présente un grammage entre 145 g/m² et 2 000 g/m², en particulier entre 230 g/m² et 800 g/m².

8. Matériau en carton multicouches (10) selon l'une des revendications précédentes, **caractérisé en ce que** le matériau en carton (10) se compose de 2 à 10 couches de matière fibreuse.

9. Matériau en carton multicouches (10) selon l'une des revendications précédentes, **caractérisé en ce que** la répartition dimensionnelle des particules de matières fines dans la deuxième couche de matière fibreuse (14) comprend au moins 0,1 - 60 % de particules de taille 0,15 - 0,297 mm, 0,1 - 60 % de particules de taille 0,149 - 0,075 mm et 0,1 - 60 % de particules de taille < 0,075 mm et / ou présente une résistance à l'égouttage d'une valeur Schopper-Riegler entre 20 - 60 SR°.

10. Procédé de fabrication d'un matériau en carton multicouches (10), en particulier d'une bande de carton multicouches, comprenant au moins une première et une deuxième couche de matière fibreuse (12, 14), **caractérisé en ce que** le procédé comprend au moins les étapes suivantes, consistant à :
- appliquer une première suspension de matière fibreuse sur une première bande transporteuse perméable ou non perméable, pour constituer la première couche de matière fibreuse (12), la première suspension de matière fibreuse présentant un matériau de base en cellulose ;
- appliquer une deuxième suspension de matière fibreuse sur une deuxième bande transporteuse perméable ou non perméable, pour constituer la deuxième couche de matière fibreuse (14), la deuxième suspension de matière fibreuse, présentant un mélange de matériau cellulosique et de particules de matières fines et un matériau d'origine pour les particules de matières fines étant de la tourbe de coco, les particules de matières fines présentant une taille de particule < 0,5 mm, en particulier < 0,3 mm et
- coucher la première couche de matière fibreuse avec la deuxième (12, 14), pour former le matériau en carton multicouches (10).

11. Procédé selon la revendication 10, **caractérisé en ce que** le rapport longueur - largeur de plus de 50 % des particules de matières fines est de 0,7 : 1 à 1 : 0,7, en particulier d'environ 1 : 1.

12. Procédé selon la revendication 10 ou 11, **caractérisé en ce qu'**au moins les étapes de procédé suivantes sont exécutées pour la fabrication des particules de matières fines :
- dissolution de la tourbe de coco au moyen d'un pulpeur ;
- broyage de la tourbe de coco dissoute et
- tamisage et / ou séparation et / ou tri de la tourbe de coco broyée au moins en tailles de particules supérieures et inférieures à 0,5 mm.

13. Procédé selon l'une des revendications 10 à 12, **caractérisé en ce que** la proportion des particules de matières fines dans la deuxième couche de matière fibreuse (14) est de 0,1 à 50 % en poids par rapport au poids total de la deuxième couche de matière fibreuse (14).

14. Procédé selon l'une des revendications 10 à 13, **caractérisé en ce qu'**au moins des agents liants, des agents de rétention, des charges, des colorants, des agents de blanchiment, des agents d'augmentation de la résistance à l'humidité et / ou d'autres matières auxiliaires, utilisé(e)s dans la fabrication du papier et du carton, sont ajoutés à une couche de matière fibreuse (12, 14).

15. Utilisation d'une couche de matière fibreuse, comprenant un mélange de matériau cellulosique et de particules de matières fines, un matériau d'origine pour les particules de matières fines étant de la tourbe de coco et les particules de matières fines présentant une taille de particule < 0,5 mm, en particulier < 0,3 mm, pour la fabrication d'un matériau en carton multicouches, en particulier d'une bande de carton multicouches.
